Europäisches Patentamt

European Patent Office

Office européen des brevets

(19)

(11) Veröffentlichungsnummer : **0 347 869 B1**

## (12) EUROPÄISCHE PATENTSCHRIFT

(45) Veröffentlichungstag der Patentschrift :
**26.08.92 Patentblatt 92/35**

(51) Int. Cl.$^5$ : **A01G 3/04,** B27B 17/00,
B25F 5/02

(21) Anmeldenummer : **89111266.6**

(22) Anmeldetag : **21.06.89**

(54) **Tragbares, motorgetriebenes Schneidgerät, insbesondere Motorsäge, Heckenschere od.dgl.**

(30) Priorität : **23.06.88 DE 3821209**

(43) Veröffentlichungstag der Anmeldung :
**27.12.89 Patentblatt 89/52**

(45) Bekanntmachung des Hinweises auf die
Patenterteilung :
**26.08.92 Patentblatt 92/35**

(84) Benannte Vertragsstaaten :
**AT CH DE FR LI SE**

(56) Entgegenhaltungen :
**EP-A- 0 267 472
DE-A- 2 440 483
DE-A- 2 909 777
DE-C- 2 816 485
US-A- 3 375 044**

(73) Patentinhaber : **Härtlein, Reinhold
SChulstrasse 6
W-8531 Hagenbüchach (DE)**

(72) Erfinder : **Härtlein, Reinhold
SChulstrasse 6
W-8531 Hagenbüchach (DE)**

(74) Vertreter : **Patentanwälte Czowalla .
Matschkur + Partner
Dr.-Kurt-Schumacher-Strasse 23 Postfach
9109
W-8500 Nürnberg 11 (DE)**

## Beschreibung

Die Erfindung bezieht sich auf ein tragbares, motorgetriebenes Schneidgerät, insbesondere Motorsäge oder Heckenschere, mit einem Gehäuse, an dessen hinterem Abschnitt Haltegriff und Bedienungsorgane, und an dessen vorderem Abschnitt Schneidorgane angeordnet sind sowie wenigstens ein Handhabungsgriff arretierbar drehbar oder schwenkbar um eine erste Achse angelenkt ist, welche im wesentlichen parallel zur Schneidebene verläuft und der Verstellung der Schneidebene dient.

Bei einer derartigen, bekannten Hand-Motorsäge (vgl. DE-A-28 16 485) ist ein hinterer Haltegriff vorgesehen, an welchem Betätigungsorgane zum An- und Abschalten der Säge angeordnet sind. Um eine Änderung der Schneidebene des Sägeblatts, insbesondere beim Ausasten oder beim Einschneiden eines Keils zum Baumfällen zu ermöglichen, besitzt die Motorsäge einen weiteren vorderen Traggriff (Handhabungsgriff), der als im wesentlichen L-förmiger Bügel ausgebildet und um eine parallel zur Längsachse des Geräts liegende Achse arretierbar schwenkbar am Gehäuse angelenkt ist. Zur Änderung der Schneidposition des Schwerts oder Sägeblatts der Motorsäge muß die Arretierung gelöst werden. Dies erfolgt nach der bekannten Ausführung, indem am Griffschenkel des vorderen Traggriffs ein Entriegelungshebel zum Lösen der Schwenkarretierung zwischen dem schwenkbaren Traggriff und dem Gehäuse betätigt wird. Die Schwenkarretierung ist in Form einer federnd in Verriegelungsstellung vorgespannten Arretierklaue ausgebildet, welche in eine fest mit dem Gehäuse verbundene Zahnscheibe eingreift. Die Arretierklaue kann durch Betätigung des Entriegelungshebels, mit dem sie über einen Kabelzug verbunden ist, aus der Eingriffsstellung in die Zahnscheibe zurückgezogen werden, so daß die Arretierung gelöst und Gehäuse und Traggriff gegeneinander verschwenkbar sind, um eine Änderung der Schneidebene herbeiführen zu können.

Muß die Lage der Schneidebene häufig gewechselt werden, wird die Arbeitsweise und Handhabung eines derartigen Geräts allerdings außerordentlich mühsam. Denn jede Änderung der Schneidebene erfordert eine manuelle Betätigung des Entriegelungshebels, der mittels einer Federkraft vorgespannt ist. Dies führt schnell zu einer Ermüdung der den Traggriff haltenden Hand des Gerätebenutzers. Da die manuelle Betätigung des Entriegelungshebels in der Regel mit dem Daumen erfolgt, umgreifen nur noch die restlichen vier Finger den Traggriff, so daß die Handhabungssicherheit des Schneidgeräts vermindert ist. Zudem ist die Realisierung mit federnd in Verriegelungsstellung vorgespannter Arretierklaue und deren Verbindung über einen Kabelzug mit dem Entriegelungshebel verschleißanfällig, insbesondere bei rauhen Umgebungsbedingungen, Korrosion und Materialermüdung.

Der Erfindung liegt daher die Aufgabe zugrunde, ein Schneidgerät der eingangs genannten Art zu schaffen, das sich durch eine bequeme Bedienbarkeit und hohe Betriebszuverlässigkeit und -sicherheit auszeichnet.

Diese Aufgabe wird mit einem Schneidgerät gelöst, das die eingangs genannten Merkmale aufweist und dadurch gekennzeichnet ist, daß der Handhabungsgriff gegenüber dem Gehäuse um mindestens eine weitere, im wesentlichen senkrecht zur Schneidebene verlaufende Achse derart verschwenkbar angelenkt ist, daß die Arretierung für die Dreh- oder Schwenkstellung bezüglich der ersten Achse geschlossen ist, wenn gegenüberliegende Rasten und Gegenrasten des Handhabungsgriffs und Gehäuses aufgrund Verschwenkens um die weitere Achse miteinander in form- und/oder reibschlüssigen Eingriff gekommen sind.

Mit der Erfindung wird ein Schneidgerät geschaffen, welches mittels eines hinteren Haltegriffs und eines vorderen Handhabungsgriffs führbar ist. Der Haltegriff ist am Gehäuse befestigt und kann in dieses integriert oder mit diesem einstückig ausgeführt sein. Der Handhabungsgriff ist mit dem Gehäuse drehbar und/oder schwenkbar um eine erste Achse und mindestens eine weitere Achse verbunden. Die erste Dreh- oder Schwenkachse erfüllt die Funktion, die Lage der Schneidebene, beispielsweise des Schwertes einer Motorsäge, verändern zu können. Um eine zuverlässige und sichere Handhabung zu ermöglichen, ist jedoch eine Arretierung notwendig, welche die Dreh- oder Schwenkstellung bezüglich der ersten Achse lösbar fixiert. Dem dient erfindungsgemäß mindestens eine weitere Gelenkverbindung des Handhabungsgriffs mit dem Gehäuse, welche Drehachsen aufweist, die im wesentlichen senkrecht zur Schneidebene verlaufen, und um welche Gehäuse und Handhabungsgriff aufeinander zu- bzw. voneinander wegschwenkbar sind. Dieses Verschwenken um diese weitere(n) Achse(n) dient im wesentlichen dazu, die Arretierung zu verschließen oder zu öffnen.

Bei der Erfindung wird von der Tatsache Gebrauch gemacht, daß der Gerätebenutzer im Schneid- oder Sägebetrieb in der Regel über den Haltegriff auf das Gehäuse einen Druck in Richtung Schneidorgane ausübt, welche meist am Gehäuse befestigt sind. Dieser Druck erfordert ein Gegenhalten durch den Handhabungsgriff, was durch die genannte Gelenkverbindung zu einer Schwenkbewegung umgesetzt wird, welche zum Anschlag der stirnseitigen Fläche des Gehäuses am Traggriff führt. Im Bereich der aneinanderliegenden Flächen von Gehäuse und Traggriff kann nun eine Arretierung in einfacher Weise ausgebildet werden, die dann durch Umkehrung der genannten Schwenkbewegung wieder geöffnet wird. Damit wird der Vorteil erzielt, daß zur Änderung der Schneidebene neben der Gelenkstelle für die erste Dreh- oder Schwenkachse nur noch eine weitere Gelenkstelle vorgesehen werden muß, die eine Schwenkbewegung um eine Achse senkrecht zur Schneidebene ermöglicht. Derartige Gelenkstellen können einfach, kostengünstig und robust ausgeführt sein. So liegt es beispielsweise im Rahmen der Erfindung, daß der Handhabungsgriff und/oder das Gehäuse mittels eines Gummielements als Gelenkstelle um die weitere Achse verschwenkbar angeordnet sind. Das Gummielement kann beispielsweise einen vertikal verlaufenden Abschnitt eines L-förmigen Handhabungsgriffs bilden. Das Öffnen der Arretierung kann dann dadurch erfolgen, daß der Traggriff vom Gehäuse manuell weggedrückt wird. Aufgrund der elastischen Eigenschaften des Gummielements kommt es bei Wegfall der manuellen Druckkraft wieder zum Verschließen der Arretierung.

Im Rahmen der Erfindung sind zur Realisierung der ersten Dreh- oder Schwenkachse und der weiteren Schwenkachse vielfältige Möglichkeiten gegeben. Zum Beispiel können hierfür Anlenkstellen zwischen Handhabungsgriff und Gehäuse vorgesehen sein. Zur Vereinfachung des konstruktiven Aufbaus führt ein erfindungsgemäßer Gedanke, nach dem die genannten Anlenkstellen innerhalb einer einzigen Gelenkvorrichtung integriert sind. Als derartige Gelenkvorrichtung eignet sich z.B. ein Kugelgelenk oder ein Pendelkugellager, welche zur verschwenkbaren Verbindung von Gehäuse und Handhabungsgriff angeordnet sind. Kugelgelenke ermöglichen prinzipiell Schwenkbewegungen um alle drei senkrecht aufeinanderstehenden Rotationsachsen. Bei Anordnung eines Pendelkugellagers kann der Traggriff gegenüber dem Gehäuse verdreht werden, wobei die Drehachse parallel zur Schneidebene verläuft. Gleichzeitig ermöglicht das Pendelkugellager auch in eingeschränktem Umfang Schwenkbewegungen um mindestens eine weitere Achse, welche durch den Lagermittelpunkt und senkrecht zur Schneidebene verläuft. Derartige Schwenkbewegungen können ausreichen, um entsprechend ausgebildete Arretierungen bezüglich der Drehachse zu öffnen bzw. zu verschließen.

Für die Arretierung sind im Rahmen der Erfindung vielfältige Ausführungsmöglichkeiten denkbar. So kann sie aus einer am Gehäuse befestigten, die erste Schwenkachse kreisbahnähnlich umlaufenden Verzahnung und mindestens einer am Handhabungsgriff befestigten Klaue bestehen, welche beim Hinschwenken des Handhabungsgriffs auf das Gehäuse und/oder umgekehrt um die weitere Achse in Eingriff mit der Verzahnung kommt. Dies führt zu einer besonders sicheren Arretierung beim Sägevorgang. Eine andere Alternative besteht darin, die Arretierung mittels zweier, je am Handhabungsgriff und am Gehäuse angebrachter Gummibeläge zu realisieren, welche profilierte Außenflächen - gleichsam wie Reifenprofile - aufweisen. Beim entsprechenden Verschwenken des Handhabungsgriffs oder des Gehäuses um die weitere Achse können die Außenflächen dann miteinander in reibschlüssige Anlage kommen.

Der Sicherheit des Schneid- und Sägebetriebs dient es, eine Rückstellfeder zwischen Handhabungsgriff und Gehäuse derart anzuordnen, daß sie dem Wegschwenken des Gehäuses vom Handhabungsgriff und/oder umgekehrt um die genannte, weitere Schwenkachse entgegenwirkt. Der Gerätebenutzer, der die Schneidebene verändern will, kann beispielsweise durch ruckartiges Wegschwenken des Handhabungsgriffs vom Gehäuse unter gleichzeitiger Auslenkung der Rückstellfeder die Arretierung lösen und die Verstellung der Schneidebene vornehmen. Danach wird der Handhabungsgriff selbständig durch die Rückstellfeder wieder in Anschlag an das Gehäuse gebracht, so daß die dazwischen befindliche Arretierung wieder geschlossen wird.

Der Erhöhung der Betriebssicherheit und Lebensdauer dient eine weitere Ausbildung der Erfindung, nach der Handhabungsgriff oder Gehäuse eine zum Gehäuse bzw. Handhabungsgriff gerichtete Auflageschulter für einen Vorsprung aufweisen, der am Gehäuse bzw. Handhabungsgriff entsprechend ausgebildet ist und bei geschlossener Arretierung aufliegt. Dies dient der Entlastung der Gelenkstellen für die genannten Dreh- und Schwenkachsen vom Gewicht des Gerätes. Andernfalls würde, wenn das Gerät vom Benutzer am Haltegriff des Gehäuses und am daran angelenkten Handhabungsgriff vom Boden beabstandet gehalten würde, das Gewicht des Geräts auf den Gelenkstellen lasten, was deren Ausfallhäufigkeit erhöhen würde. Bei Verwendung der Auflageschulter mit dazugehörigem Vorsprung können die Gelenk- bzw. Anlenkstellen einfach und kostengünstig ausgebildet sein.

Weitere Vorteile, Merkmale und Einzelheiten der Erfindung ergeben sich aus den Unteransprüchen, der nachfolgenden Beschreibung eines Ausführungsbeispiels sowie anhand der Zeichnung. Dabei zeigen:

Fig. 1 eine Seitenansicht einer Motorsäge mit einem erfindungsgemäß angelenkten Handhabungsgriff, wobei die Motorsäge selbst nur schematisch in strichpunktierten Linien dargestellt ist,

Fig. 2 eine Stirnansicht gemäß der Linie II-II in Fig. 1, und

Fig. 3 bis 5 jeweils vergrößerte Seitenansichten unterschiedlicher Ausbildungen der Anlenkung des Handhabungsgriffs am Gerätegehäuse.

Übereinstimmende Bezugszeichen unterschiedlicher Figuren bezeichnen einander funktionsmäßig entsprechende Teile.

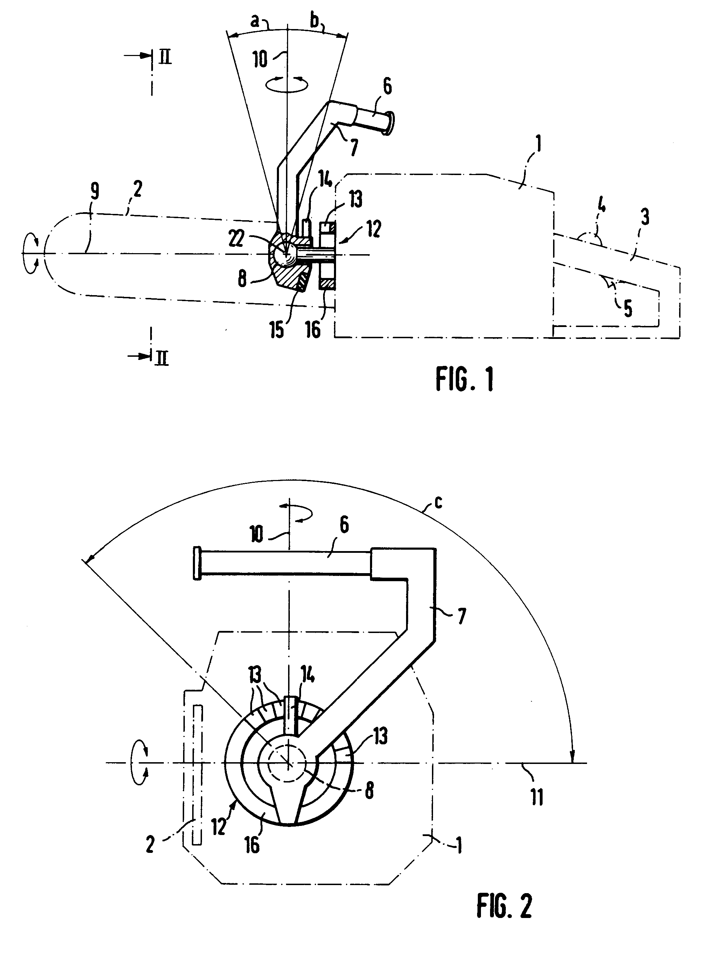

Gemäß Figuren 1 und 2 ist an der Stirnwand des Gehäuses 1 das Schwert 2 der Motorkettensäge gehaltert. An der Rückwand des Gehäuses 1 ist ein Haltegriff 3 angeformt, an dem - für die haltende Hand erreichbar- Bedienungsorgane 4, 5 angeordnet sind. Der Stirnwand des Gehäuses 1 gegenüberliegend und benachbart zum Schwert 2 ist ein vorderer Handhabungsgriff 6 mit einem daran angeformten Stiel 7 vorgesehen. Der Stiel

EP 0 347 869 B1

7 führt zu einer Gelenkstelle 8, über welche der Handhabungsgriff 6 am Gehäuse 1 gegenüber diesem verschwenkbar angelenkt ist. Wie in Figuren 1 und 2 angedeutet, ist im dort gezeichneten Ausführungsbeispiel die Gelenkstelle mittels eines Kugelkopfgelenks realisiert, welches ein Verschwenken des Handhabungsgriffs 6 sowohl um eine erste, parallel zur Schneidebene des Schwertes 2 verlaufende Dreh- oder Schwenkachse 9 als auch um die weiteren darauf senkrecht stehenden Rotationsachsen 10 und 11 ermöglicht.

Die erste Dreh- oder Schwenkachse 9 ermöglicht ein Verschwenken des Handhabungsgriffs 6 um den Winkel c (vergl. Fig. 2), was hauptsächlich zur Verstellung der Schneidebene des Schwertes 2 dient. Um die Lage der Schneidebene zu fixieren, ist in der Nähe der Gelenkstelle 8 eine Arretierung 12 angeordnet. Diese besteht in dem in den Figuren 1 und 2 gezeichneten Ausführungsbeispiel aus einem oberhalb der ersten Achse 9 befindlichen Rasten/Gegenrastenpaar und einem weiteren unterhalb der Achse angeordneten Rasten/Gegenrastenpaar. Das obere Paar ist aus einem an der Stirnwand des Gehäuses 1 ortsfest fixierten Zahnkranz 13 und einer gegenüberliegenden Arretierklaue 14 gebildet, welche im unteren, die Gelenkstelle 8 umgebenden Endbereich des Stieles 7 des Handhabungsgriffs 6 ausgebildet ist. Das Paar unterhalb der ersten Schwenkachse 9 ist im wesentlichen aus einem Gummibelag 15, der an der unteren Kante des Stieles 7 angebracht ist, und einer weitgehend bündig gegenüberliegenden Metallscheibe 16 gebildet, die von der Stirnwand des Gehäuses 1 in Richtung auf den Gummibelag 15 vorspringt.

Wird der Handhabungsgriff 6 um seine in Fig. 1 gezeigte Mittelstellung, in der die Arretierung 12 geöffnet ist, nach vorne um die weitere Schwenk-/Rotationsachse 11 (vgl. Fig. 2) längs des Winkels a (vgl. Fig. 1) verschwenkt, kommt der Gummibelag 15 in weitgehend reibschlüssige Anlage auf die Metallscheibe 16. Dieser Reibschluß bewirkt eine Fixierung und damit Arretierung der Dreh- oder Schwenkstellung des Handhabungsgriffs 6 um die erste Achse 9. Durch die Verwendung des Gummibelags 15 wird noch der zusätzliche Vorteil erzielt, daß im Moment von dessen Anschlag auf die Metallscheibe 16 der dabei entstehende Stoß elastisch gedämpft und damit die den Handhabungsgriff 6 haltende Hand der Bedienungsperson entlastet wird. Wird der Handhabungsgriff 6 aus der genannten Mittelstellung um die weitere Schwenkachse 11 längs des Winkels b nach hinten verschwenkt, rastet die Arretierklaue 14 in eine Zahnlücke des Zahnkranzes 13 an der Gehäusestirnwand ein. Hierdurch wird eine formschlüssige Feststellung der Schneidebene des Schwertes 2 erzielt. Bei diesem Ausführungsbeispiel sind also zur Bildung der Arretierung 12 zwei alternativ verschließbare Rasten/Gegenrastenpaare 13, 14 und 15, 16 vorgesehen. Beim Nach-vorne-Schwenken längs des Winkels a kommt das eine Paar, und beim Nach-hinten-Schwenken längs des Winkels b das andere Paar miteinander in Eingriff. Dieser Mechanismus ist dem Bewegungsablauf beim Bedienen einer Motorkettensäge besonders angepaßt und ermöglicht ein effektives und sicheres Arbeiten mit dem Gerät.

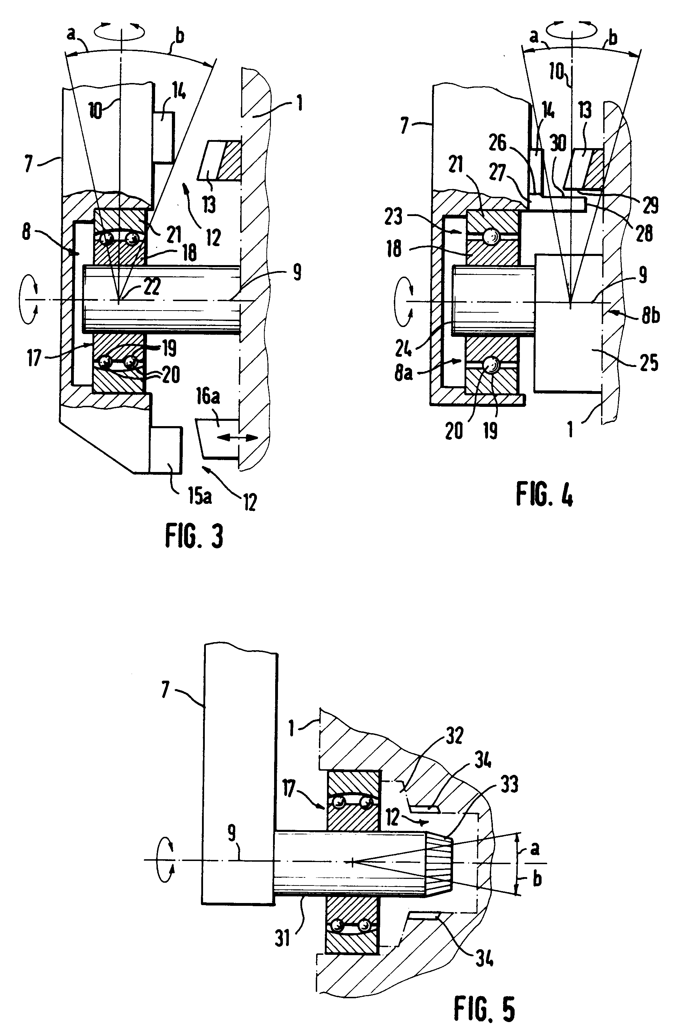

Gemäß dem in Fig. 3 vergrößert gezeichneten Ausschnitt ist als Gelenkstelle 8 für den Handhabungsgriff bzw. dessen Stiel 7 ein Pendelkugellager 17 mit einem Innenring 18, welches Laufrillen 19 für Kugeln 20 besitzt, und einem Außenring 21, der für die Kugeln 20 eine hohlkugelig geschliffene Rollbahn bildet, vorgesehen. Bekanntlich kann bei derartigen Pendelkugellagern der Innenring 18 um den Lagermittelpunkt gegenüber dem Außenring 21 verschwenkt werden. Dies bedeutet vorliegend, daß der Stiel 7 des Handhabungsgriffs um den Lagermittelpunkt 22 herum längs des Winkels a bzw. b nach vorne bzw. nach hinten bewegt werden kann, so daß das untere bzw. obere Rasten/Gegenrastenpaar 15, 16 bzw. 13, 14 jeweils miteinander in Eingriff gebracht werden kann. Das obere Rasten/Gegenrastenpaar 13, 14 entspricht dem anhand der Figuren 1 und 2 erläuterten. Dagegen ist das untere Rasten/Gegenrastenpaar abweichend von dem in Figuren 1 und 2 gezeigten wie folgt ausgebildet: an der unteren Kante des Stieles 7 des Handhabungsgriffes ist ein stoßdämpfendes Gummielement 15a fixiert, welches beim Verschwenken in Richtung des Winkels a auf einen an der Stirnwand des Gehäuses gegenüberliegend angeformten Prellbock 16a aufschlägt. Wie durch den Doppelpfeil in Fig. 3 angedeutet, ist die Weite, mit der der Prellbock 16a in Richtung auf das Gummielement 15a vorspringt, ggf. einstellbar; dadurch kann erreicht werden, daß der Winkel a, in dessen Richtung der Handhabungsgriff nach vorne geschwenkt werden kann, nicht zu groß ist.

Gemäß Fig. 4 ist für die erste Dreh- oder Schwenkachse 9 eine gesonderte Gelenkstelle 8a und für die weiteren Schwenkachsen 10, 11 eine gesonderte Gelenkstelle 8b vorgesehen. Die erstgenannte Gelenkstelle 8a ist mittels eines Rillenkugellagers 23 realisiert, welches einzig eine Drehung um die erste Achse 9 ermöglicht. Das Rillenkugellager 23 ist auf einem Ansatz 24 aufgesteckt, welcher von einem Gummiblock 25 aus vorspringt und an diesem angeformt ist. Der Gummiblock 25 bildet die zweitgenannte, gesonderte Gelenkstelle 8b, mittels welcher der Stiel 7 des Handhabungsgriffs in Richtung des Winkels a bzw. b nach vorne bzw. nach hinten verschwenkt werden kann. Das oberhalb der ersten Schwenkachse 9 angeordnete Rasten/Gegenrastenpaar 13, 14 entspricht den in Figuren 1 bis 3 gezeigten. Darüber hinaus ist an der unteren, waagrecht verlaufenden Kante 26 der Arretierklaue 14 sowie an der dazu benachbarten Kante 27 des Stieles 7 eine Auflageschulter 28 angeformt, welche bei nichtarretierter Stellung des Handhabungsgriffes in Richtung auf die Gehäusestirnwand horizontal vorspringt. Wird der Handhabungsgriff längs des Winkels a verstellt, kommt die Unterseitenfläche 29 des vorspringenden Zahnkranzes 13 zur Auflage auf die Oberseitenfläche 30 der Auf-

4

lageschulter 28. Damit wird - bei von der Gehäusestirnwand weggeschwenktem Handhabungsgriff - eine Entlastung des Gummigelenks 8b erreicht. Aufgrund der Elastizität des Gummiblocks 25, mit dem die Gelenkstelle 8b realisiert ist, hat diese derart ausgeführte Gelenkstelle stets das Bestreben, die Mittelstellung einzuhalten bzw. wieder herbeizuführen. Für die Bedienungsperson wird also das Erreichen der Mittelstellung erleichtert.

Bei der Ausführung nach Fig. 5 springt am unteren Ende des Stieles 7 ein Bolzen 31 waagrecht vor und erstreckt sich in eine in der Stirnwand des Gehäuses 1 befindliche Aussparung 32. Auf den Bolzen 31 ist ein Pendelkugellager 17 etwa mittig positioniert aufgesteckt. Es erfüllt im wesentlichen die selben Funktionen wie das in Fig. 3 gezeigte. Das freie Ende des Bolzens 31 ist mit einer Stirnradverzahnung 33 versehen, welche von einer komplementären Innenverzahnung 34 derart umgeben ist, daß beim Verschwenken in Richtung des Winkels a bzw. b die Stirnradverzahnung 33 mit der Innenradverzahnung 34 in Eingriff kommt.

Die Erfindung ist nicht auf die oben beschriebenen Ausführungsbeispiele beschränkt. So ist es ohne weitere möglich, die gezeigten Realisierungsmöglichkeiten für die Arretierung konstruktiv abzuwandeln, indem beispielsweise eine formschlüssige Verriegelung mittels einer Klauenkupplung oder einer Lochscheibe mit axial oder radial sich erstreckenden Ausnehmungen, in welche ein Riegel lösbar eingreift, verwendet wird. Anstelle einer formschlüssigen kann auch eine reibschlüssige Arretierung mit einer Scheibenbremse oder gleichwirkenden Einrichtungen verwendet werden.

Schließlich ist es auch denkbar, einen Mechanismus vorzusehen, der auf ein Verschwenken des Handhabungsgriffs längs des Winkels a bzw. b dergestalt anspricht, daß er die Arretierung zur Feststellung des Handhabungsgriffs am Gehäuse schließt. Dies kann z.B. bei der Ausführung nach Fig. 5 dadurch realisiert werden, daß der dortige Bolzen 31 noch zusätzlich von einer (gummi-)elastischen Lagerung umfaßt ist, welche in die Gehäuseaussparung 32 gemäß Fig. 5 eingepaßt ist. Diese elastische Lagerung dient dazu, ein Zurückkehren des ausgelenkten Handhabungsgriffs in dessen Mittelstellung zu fördern. Anstelle der Verzahnung 33, 34 ist dann das Ende des Bolzens 31 mit einem vorspringenden Stift versehen, welcher bei (nicht-arretierter) Mittelstellung des Handhabungsgriffs einen vom Gehäuse vorspringenden Zapfen in einer Position hält, die nicht zum Auslösen des Arretierungsmechanismus führt. Wird der Handhabungsgriff um den Winkel a bzw. b verschwenkt, ändert sich die Stellung des vorspringenden Stifts, so daß beispielsweise mittels Federkraft der Zapfen in seiner Position so verändert werden kann, daß der Arretierungsmechanismus zum Eingriff der obengenannten Rasten und Gegenrasten miteinander führt. Der Mechanismus zur Bewerkstelligung der Arretierung kann auf vielfältige Weise realisiert sein, z.B. mittels eines Gestänges oder auf elektromechanische Weise durch Relais oder elektromagnetische Spulen.

## Patentansprüche

1. Tragbares, motorgetriebenes Schneidgerät, insbesondere Motorsäge oder Heckenschere, mit einem Gehäuse (1), an dessen hinterem Abschnitt ein Haltegriff (3) und Bedienungsorgane (4,5), und an dessen vorderem Abschnitt Schneidorgane (2) angeordnet sind sowie wenigstens ein Handhabungsgriff (6) arretierbar drehbar oder schwenkbar um eine erste Achse (9) angelenkt ist, welche im wesentlichen parallel zur Schneidebene verläuft und der Verstellung der Schneidebene dient, dadurch gekennzeichnet, daß der Handhabungsgriff (6) gegenüber dem Gehäuse (1) um mindestens eine weitere, im wesentlichen senkrecht zur Schneidebene verlaufende Achse (10, 11) derart verschwenkbar angeordnet ist, daß die Arretierung (12) für die Dreh- oder Schwenkstellung bezüglich der ersten Achse (9) geschlossen ist, wenn einander gegenüberliegende Rasten und Gegenrasten (13, 14) des Handhabungsgriffs (6) und Gehäuses (1) aufgrund Verschwenkens um die weitere Achse (10, 11) miteinander in form- und/oder reibschlüssigen Eingriff gekommen sind.

2. Schneidgerät nach Anspruch 1, dadurch gekennzeichnet, daß der Handhabungsgriff (6) und/oder das Gehäuse (1) mittels eines Gummielements (25) als Gelenkstelle (8b) um die weitere Achse verschwenkbar angeordnet sind.

3. Schneidgerät nach Anspruch 1 oder 2, dadurch gekennzeichnet, daß die Anlenkstelle für die erste Dreh- oder Schwenkachse (9) und eine Anlenkstelle für die weitere Schwenkachse mittels einer einzigen Kugelkopfgelenk- oder Pendelkugellagerverbindung od. dgl. zwischen Gehäuse (1) und Handhabungsgriff (6) realisiert sind.

4. Schneidgerät nach einem der vorherigen Ansprüche, dadurch gekennzeichnet, daß die Arretierung (12) wenigstens aus einer am Handhabungsgriff (6) und/oder Gehäuse (1) befestigten, die erste Schwenkachse (9) kreisbahnähnlich umlaufenden Verzahnung (13) und mindestens einer am Handhabungsgriff (6) bzw. Gehäuse (1) befestigten Klaue (14) oder komplementär ausgebildeten Gegenverzahnung besteht, welche beim Hinschwenken des Handhabungsgriffs (6) auf das Gehäuse (1) und/oder des Gehäuses (1) auf den Handhabungsgriff (6) um die weitere Achse (10, 11) in Eingriff mit der Verzahnung (13) kommt.

5. Schneidgerät nach einem der Ansprüche 1 bis 3, dadurch gekennzeichnet, daß die Arretierung (12) wenigstens mittels eines oder mehrerer, am Handhabungsgriff und/oder am Gehäuse angebrachter Gummibeläge (15) mit ggf. profilierter Außenfläche realisiert ist, welche beim Hinschwenken des Handhabungsgriffs (6) auf das Gehäuse (1) und/oder des Gehäuses (1) auf den Handhabungsgriff (6) um die weitere Achse (10, 11) in reibschlüssige Anlage an die gegenüberliegende Fläche kommen.

6. Schneidgerät nach einem der vorhergehenden Ansprüche, dadurch gekennzeichnet, daß der Handhabungsgriff (6) um eine Mittelstellung, in der die Arretierung (12) geöffnet ist, nach vorne (a) und nach hinten (b) bzw. seitlich nach rechts und nach links jeweils bis an das Gehäuse (1) anschlagend verschwenkbar gelagert ist, wobei mit jedem Anschlag gegenüberliegende Rasten und Gegenrasten des Handhabungsgriffs und Gehäuses zum Schließen der Arretierung (12) miteinander in Eingriff kommen.

7. Schneidgerät nach Anspruch 6, gekennzeichnet durch zueinander konzentrisch angeordnete Rasten und Gegenrasten (33, 34).

8. Schneidgerät nach Anspruch 7, gekennzeichnet durch eine am Handhabungsgriff (6) oder Gehäuse (1) angeordnete, radartige Stirnverzahnung (33), welche mit jedem Anschlag in Eingriff mit einer am Gehäuse bzw. Handhabungsgriff angeordneten, konzentrischen Innenverzahnung (34) kommt.

9. Schneidgerät nach Anspruch 6, dadurch gekennzeichnet, daß die Arretierung (12) aus wenigstens zwei alternativ verschließbaren Rasten/Gegenrastenpaaren (13, 14 bzw. 15, 16) gebildet ist, von denen bei senkrechter Schneidebene eines oberhalb (13, 14) und das andere unterhalb (15, 16) der weiteren Achse (10, 11) zum Verschwenken angeordnet ist, und das obere Paar (13, 14) eine formschlüssige, das untere Paar (15, 16) eine reibschlüssige und anschlagdämpfende Verriegelung ermöglicht.

10. Schneidgerät nach einem der vorherigen Ansprüche, dadurch gekennzeichnet, daß eine Rückstellfeder zwischen Gehäuse (1) und Handhabungsgriff (6) derart angeordnet ist, daß sie dem Wegschwenken des Gehäuses vom Handhabungsgriff und/oder des Handhabungsgriffs vom Gehäuse um die weitere Schwenkachse (10, 11) entgegenwirkt.

11. Schneidgerät nach einem der vorherigen Ansprüche, dadurch gekennzeichnet, daß der Handhabungsgriff (6) oder das Gehäuse (1) eine Auflageschulter (28) für einen gegenüberliegenden Vorsprung (13) aufweisen, der am Gehäuse bzw. Handhabungsgriff entsprechend ausgebildet ist und nach dessen Verschwenken nach vorne auf der Auflageschulter (28) aufliegt.

12. Schneidgerät nach einem der Ansprüche 9 bis 11, dadurch gekennzeichnet, daß das untere Rasten/Gegenrastenpaar (15, 16) mittels eines am Handhabungsgriff (6) oder Gehäuse (1) angebrachten Gummielements (15a) und eines gegenüberliegenden, am Gehäuse bzw. Handhabungsgriff angebrachten Vorsprungs (16a) realisiert ist, dessen Abstand vom Gummielement (15a) einstellbar ist.

## Claims

1. Portable, motor-driven cutting tool, in particular a chain saw or hedge trimmers, with a housing (1), on the rear section of which a supporting handle (3) and operating elements (4, 5) are mounted and on the front section of which cutting elements (2) are mounted, and at least one operating handle (6) is attached so as to be lockably rotatable or pivotable about a first axis (9), which runs substantially parallel to the cutting plane and serves to adjust the cutting plane, characterised in that the operating handle (6) is pivotably mounted relative to the housing (1) about at least one further axis (10, 11) extending substantially perpendicular to the cutting plane in such a manner that the locking device (12) for the rotary or pivotal position relative to the first axis (9) is closed when mutually opposite catches and counter-catches (13, 14) of the operating handle (6) and of the housing (1) engage with one another with positive and/or non-positive locking due to pivoting about the further axis (10, 11).

2. Cutting device according to claim 1, characterised in that the operating handle (6) and/or the housing (1) are pivotably mounted about the further axis by means of a rubber element (25) as a pivotal point (8b).

3. Cutting tool according to claim 1 or 2, characterised in that the pivotal point for the first axis of rotation or pivoting (9) and a pivotal point for the further pivotal axis are formed by means of a single ball head joint or pendulum bearing joint or the like between the housing (1) and the operating handle (6).

4. Cutting tool according to one of the preceding claims, characterised in that the locking device (12) consists at least of splining (13) surrounding the first pivotal axis (9) in the manner of a circular track and fixed to the operating handle (6) and/or the housing (1), and of at least one claw (14) or correspondingly formed counter-splining fixed to the operating handle (6) and/or the housing (1), which counter-splining meshes with the splining (13) when the operating handle (6) is pivoted on to the housing (1) and/or the housing (1) is pivoted on to the operating handle (6) about the further axis (10, 11).

5. Cutting tool according to one of claims 1 to 3, characterised in that the locking device (12) is formed at least of one or more rubber layers (15) with an optionally profiled outer face, which are applied to the operating handle and/or the housing and which come into non-positively locking contact with the opposite face when the operating handle (6) is pivoted on to the housing (1) and/or the housing (1) is pivoted on to the operating handle (6) about the further axis (10, 11).

6. Cutting tool according to one of the preceding claims, characterised in that the operating handle (6) is pivotably mounted about a central position, in which the locking device (12) is open, its pivoting being limited at the front (a) and at the rear (b) or laterally to the right and left up to the housing (1) in each case, in which case with each stop mutually opposite catches and counter-catches of the operating handle and of the housing engage with one another in order to close the locking device (12).

7. Cutting tool according to claim 6, characterised by concentrically arranged catches and counter-catches (33, 34).

8. Cutting tool according to claim 7, characterised by a wheel-like end splining (33) provided on the operating handle (6) or on the housing (1) and meshing with each stop with concentric female splining (34) provided on the housing or operating handle.

9. Cutting tool according to claim 6, characterised in that the locking device (12) is formed of at least two alternately lockable catch/counter-catch pairs (13, 14, and 15, 16 respectively), one of which is mounted above (13, 14) and the other below (15, 16) the further axis (10, 11) for pivoting in the case of a vertical cutting plane, and the upper pair (13, 14) permits positive locking and the lower pair (15, 16) permits non-positive, stop-damping locking.

10. Cutting tool according to one of the preceding claims, characterised in that a return spring is so mounted between the housing (1) and the operating handle (6) that it counteracts the pivoting of the housing away from the operating handle and/or of the operating handle from the housing about the further axis (10, 11).

11. Cutting tool according to one of the preceding claims, characterised in that the operating handle (6) or the housing (1) have a support shoulder (28) for an opposite projection (13), which is formed correspondingly on the housing or operating handle and which rests on the support shoulder (28) after its forward pivoting.

12. Cutting tool according to one of claims 9 to 11, characterised in that the lower catch/counter-catch pair (15, 16) is formed of a rubber element (15a) mounted on the operating handle (6) or housing (1) and of an opposite projection (16a) mounted on the housing or operating handle, its distance from the rubber element (15a) being adjustable.

## Revendications

1. Appareil de coupe portable à moteur, en particulier tronçonneuse ou taille-haies, comprenant un carter (1), auquel sont agencés une poignée (3) et des organes d'actionnement (4, 5) à sa section arrière et des organes de coupe (2) à sa section avant et à laquelle au moins une poignée de manipulation (6) est articulée tournable ou pivotable, en pouvant être bloquée, autour d'un premier axe (9), qui est sensiblement parallèle au plan de coupe et sert à déplacer le plan de coupe, caractérisé en ce que la poignée de manipulation (6) est agencée pivotable, vis-à-vis du carter (1), autour d'au moins un autre axe (10, 11) sensiblement perpendiculaire au plan de coupe d'une manière telle que le dispositif d'arrêt (12) pour la position de rotation ou de pivotement est fermé par rapport au premier axe (9) lorsque des cliquets et des contre-cliquets (13, 14), situés face-à-face, de la poignée (6) de manipulation et du carter (1) sont amenés en prise l'un avec l'autre, en engagement avec blocage géométrique ou en engagement avec frottement, en raison du pivotement autour de l'autre axe (10, 11).

2. Appareil de coupe selon la revendication 1, caractérisé en ce que la poignée de manipulation (6) et/ou le carter (1) sont agencés pivotables autour de l'autre axe au moyen d'un élément en caoutchouc (25) agissant comme emplacement d'articulation (86).

3. Appareil de coupe selon la revendication 1 ou 2, caractérisé en ce que l'emplacement d'articulation pour le premier axe de rotation ou de pivotement (9) et un emplacement d'articulation pour l'autre axe de pivotement sont réalisés au moyen d'une liaison unique entre la poignée de manipulation (6) et le carter (1), à articulation à rotule ou à roulement à billes articulé ou similaire.

4. Appareil de coupe selon l'une des revendications précédentes, caractérisé en ce que le dispositif d'arrêt (12) se compose d'au moins une denture (13), fixée à la poignée de manipulation (6) et/ou au carter (1), disposée en arc de cercle autour du premier axe de pivotement (9), et d'au moins une griffe (14) ou d'une contre-denture réalisée de façon complémentaire, fixée à la poignée de manipulation (6) ou au carter (1), qui vient en prise avec la denture (13) lorsque l'on fait pivoter autour de l'autre axe (10, 11) la poignée de manipulation (6) sur le carter (1) et/ou le carter (1) sur la poignée de manipulation (6).

5. Appareil de coupe selon l'une des revendications 1 à 3, caractérisé en ce que le dispositif d'arrêt (12) est réalisé au moins à l'aide d'une ou plusieurs garnitures (15) de caoutchouc, à surface extérieure éventuellement profilée, appliquées à la poignée de manipulation et/ou au carter, qui viennent s'appuyer en engagement par friction à la surface opposée lorsque l'on fait pivoter en avant, autour de l'autre axe (10 11), la poignée de manipulation (6) sur le carter (1) et/ou le carter (1) sur la poignée de manipulation (6).

6. Appareil de coupe selon l'une des revendications précédentes, caractérisé en ce que la poignée de manipulation (6) est logée en pouvant pivoter, autour d'une position moyenne, dans laquelle le dispositif d'arrêt (12) est ouvert, vers l'avant (a) et vers l'arrière (b) ou latéralement vers la droite et vers la gauche chaque fois jusqu'à venir en butée au carter (1), des cliquets et des contre-cliquets de la poignée de manipulation et du carter venant en prise l'un avec l'autre pour fermer le dispositif d'arrêt (12) à chaque venue en butée.

7. Appareil de coupe selon la revendication 6, caractérisé par des cliquets et des contre-cliquets (33, 34) agencés de façon concentrique entre eux.

8. Appareil de coupe selon la revendication 7, caractérisé par une denture frontale (33) en forme de roue, agencée à la poignée de manipulation (6) ou au carter (1), qui vient en prise à chaque venue en butée avec une denture intérieure concentrique (34) agencée au carter ou à la poignée de manipulation.

9. Appareil de coupe selon la revendication 6, caractérisé en ce que le dispositif d'arrêt (12) est formé d'au moins deux paires de cliquets/contre-cliquets (13, 14 et 15, 16) qui peuvent être fermés en alternance, parmi lesquelles, lorsque le plan de coupe est vertical, l'une est agencée au-dessus (13,14) et l'autre au-dessous (15, 16) de l'autre axe (10, 11) pour le pivotement, et la paire supérieure (13, 14) permet un verrouillage en engagement avec blocage géométrique, et la paire intérieure (15, 16) un verrouillage à engagement avec friction et à amortissement de venue en butée.

10. Appareil de coupe selon l'une des revendications précédentes, caractérisé en ce qu'un ressort de rappel est agencé entre le carter (1) et la poignée de manipulation (6) d'une manière telle qu'il s'oppose à un pivotement, autour de l'autre axe de pivotement (10, 11) du carter à l'écart de la poignée de manipulation et/ou de la poignée de manipulation à l'écart du carter.

11. Appareil de coupe selon l'une des revendications précédentes, caractérisé en ce que la poignée de manipulation (6) ou le carter (1) présente un épaulement d'appui (28) pour une saillie opposée (13) qui est réalisée de façon correspondante au carter ou à la poignée de manipulation et qui repose après le pivotement de celle-ci vers l'avant sur l'épaulement d'appui (28).

12. Appareil de coupe selon l'une des revendications 9 à 11, caractérisé en ce que la paire inférieure de cliquet/contre-cliquet (15, 16) est réalisée au moyen d'un élément en caoutchouc (15a) placé à la poignée de manipulation (6) ou au carter (1) et d'une saillie opposée (16a), placée au carter ou à la poignée de manipulation, dont l'espacement de l'élément en caoutchouc (15a) est réglable.

FIG. 1

FIG. 2

EP 0 347 869 B1

FIG. 3

FIG. 4

FIG. 5

11